(19) Europäisches Patentamt
European Patent Office
Office européen des brevets

(11) EP 4 257 235 B1

(12) EUROPEAN PATENT SPECIFICATION

(45) Date of publication and mention of the grant of the patent:
**12.02.2025 Bulletin 2025/07**

(21) Application number: **22895792.4**

(22) Date of filing: **27.07.2022**

(51) International Patent Classification (IPC):
***B01J 23/00*** (2006.01) ***B01J 23/02*** (2006.01)
***B01J 21/06*** (2006.01) ***B01J 23/755*** (2006.01)
***B01J 37/02*** (2006.01) ***B01J 37/08*** (2006.01)
***C01B 3/40*** (2006.01) ***B01J 35/70*** (2024.01)
***B01J 23/63*** (2006.01) ***B01J 23/83*** (2006.01)
***B01J 37/03*** (2006.01) ***B01J 35/64*** (2024.01)

(52) Cooperative Patent Classification (CPC):
(C-Sets available)
**B01J 23/002; B01J 23/63; B01J 23/83; B01J 35/657; B01J 35/733; B01J 37/0225; B01J 37/033; C01B 3/40;** B01J 2523/00; C01B 2203/1047; Y02P 20/52 (Cont.)

(86) International application number:
**PCT/KR2022/011076**

(87) International publication number:
**WO 2023/090583 (25.05.2023 Gazette 2023/21)**

# (54) METHANE-REFORMING CATALYST AND METHOD FOR PRODUCING SAME

METHANREFORMIERUNGSKATALYSATOR UND VERFAHREN ZUR HERSTELLUNG DAVON

CATALYSEUR DE REFORMAGE DE MÉTHANE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2021 KR 20210158414**

(43) Date of publication of application:
**11.10.2023 Bulletin 2023/41**

(73) Proprietor: **LG Chem, Ltd.**
**Seoul 07336 (KR)**

(72) Inventors:
- **KIM, Sojin**
  **Daejeon 34122 (KR)**
- **KIM, Sangjin**
  **Daejeon 34122 (KR)**
- **KIM, Suji**
  **Daejeon 34122 (KR)**
- **CHO, Jun Yeon**
  **Daejeon 34122 (KR)**
- **CHOI, Jae Soon**
  **Daejeon 34122 (KR)**
- **CHOI, Jun Seon**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**EP-A1- 1 958 692**
**CN-B- 107 930 626**
**KR-A- 20020 080 387**
**KR-A- 20080 068 908**
**KR-A- 20180 127 267**
**KR-A- 20180 136 701**
**US-A1- 2007 100 190**
**US-A1- 2009 286 677**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **SUDHAKARAN M.S.P: "Dry Reforming of Propane over [gamma]-Al2O3 and Nickel Foam Supported Novel SrNiO3 Perovskite Catalyst", CATALYSTS, vol. 9, no. 1, 10 January 2019 (2019-01-10), CH, pages 68, XP093163335, ISSN: 2073-4344, Retrieved from the Internet <URL:https://www.mdpi.com/2073-4344/9/1/68/pdf> DOI: 10.3390/catal9010068**

(52) Cooperative Patent Classification (CPC): (Cont.)

C-Sets
B01J 2523/00, B01J 2523/24, B01J 2523/36, B01J 2523/47, B01J 2523/821;
B01J 2523/00, B01J 2523/24, B01J 2523/36, B01J 2523/847

## Description

[Technical Field]

This application claims priority to and the benefit of Korean Patent Application No. 10-2021-0158414 filed in the Korean Intellectual Property Office on November 17, 2021.

The present application relates to a catalyst for methane reformation and a method for producing the same.

[Background Art]

As part of activities to reduce greenhouse gases caused by global warming, many studies on carbon dioxide conversion technologies have been conducted. The carbon dioxide reforming reaction, one of the carbon dioxide conversion technologies, is a technology to obtain synthesis gas composed of hydrogen and carbon monoxide by reacting methane and carbon dioxide.

Synthesis gas is a material with high development value from diverse downstream raw materials. As a method for industrially obtaining synthesis gas ($H_2$/CO), the reforming reaction of natural gas may be largely divided into steam reforming process, carbon dioxide ($CO_2$) reforming process, catalytic partial oxidation process, autothermal reforming process, tri-reforming process, such as the following Reaction Schemes 1 to 5, and the like.

[Reaction Scheme 1] $CH_4 + H_2O \rightarrow 3H_2 + CO$ $\triangle H$ = 226 kJ/mol

[Reaction Scheme 2] $CH_4 + CO_2 \rightarrow 2H_2 + 2CO$ $\triangle H$ = 261 kJ/mol

[Reaction Scheme 3] $CH_4 + 0.5O_2 \rightarrow 2H_2 + CO$ $\triangle H$ = -44 kJ/mol

[Reaction Scheme 4] autothermal reforming: Reaction Scheme 1 + Reaction Scheme 3

[Reaction Scheme 5] tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that the efficiency of converting biogas into hydrogen is high, but there is a problem in that the economic feasibility deteriorates because noble metal catalysts are expensive.

Accordingly, nickel catalysts, which have a high hydrogen conversion efficiency and are relatively inexpensive, are usually used in the reforming process. However, in such a case, there is a problem in that the nickel catalyst is deactivated by carbon that is inevitably produced on the surface of the nickel catalyst.

Therefore, there is a need in the art for developing a catalyst which is resistant to carbon deposition and can be effectively applied to the reforming process of methane. KR-A-2018 0136701 discloses a catalyst for reforming a biogas containing methane and carbon dioxide consisting of a layer of Sr(1-y)YyTi(1-x)RuyO(3-$\delta$) where x = >0 to <1 and y is preferably >0 to 0.08 (i..e. a compound of formulas 1 and 2) formed by depositing a precursor solution on a monolithic substrate followed by drying and firing.

[Detailed Description of the Invention]

[Technical Problem]

The present application has been made in an effort to provide a catalyst for methane reformation and a method for producing the same.

[Technical Solution]

An exemplary embodiment of the present application provides a catalyst for methane reformation, comprising:

a porous metal support;
perovskite-based catalyst particles supported on the porous metal support; and
a perovskite-based binder supported on the porous metal support,
in which the perovskite-based catalyst particles and the perovskite-based binder each independently comprise a compound represented by the following Chemical Formula 1.

[Chemical Formula 1] $Sr_{1-x}A_xTi_{1-y}B_yO_{3-\delta}$

In Chemical Formula 1,

A is Y, La or Ba,
B is Ni, Co, Fe, Mn, Cr, Mo, Ru or Rh,
x is a real number of 0 or more and less than 1,
y is a real number of 0 or more and less than 0.5,
$\delta$ is a real number of more than 0 and less than 1, and
$x + y > 0$ is satisfied.

Further, another exemplary embodiment of the present application provides a method for producing a catalyst for methane reformation, the method comprising:

preparing a slurry by mixing perovskite-based catalyst particles and a perovskite-based catalyst sol;
impregnating a porous metal support with the slurry; and
drying and firing the porous metal support,
in which the perovskite-based catalyst particles and the perovskite-based catalyst sol each independently comprise the compound represented by Chemical Formula 1.

[Advantageous Effects]

The catalyst for methane reformation according to an exemplary embodiment of the present application can be produced by preparing a slurry in which catalyst particles and a catalyst sol of the same or similar series are mixed using an inorganic binder, and coating a metal support having high thermal conductivity with the slurry to increase the content of catalyst supported at one time and suppress side reactions caused by a binder.

In addition, the catalyst for methane reformation according to an exemplary embodiment of the present application is characterized in that reaction heat is easily controlled compared to pellet-type or powder-type catalysts in the related art because catalyst particles and a binder are supported on a porous metal support having high thermal conductivity.

[Brief Description of Drawings]

FIG. 1 is a view illustrating a set of electron microscope photographs of the surface of the catalyst for methane reformation according to Example 1 of the present application.

[Best Mode]

Hereinafter, the present specification will be described in more detail.

When one member is disposed "on" another member in the present specification, this comprises not only a case where the one member is brought into contact with another member, but also a case where still another member is present between the two members.

When one part "comprises" one constituent element in the present specification, unless otherwise specifically described, this does not mean that another constituent element is excluded, but means that another constituent element may be further comprised.

Currently, in the case of catalysts which are widely used in the field of reformers, generally, powder-type catalysts and pellet-type support catalysts are usually used. Although the powder-type catalysts may have excellent performance due to excellent dispersion degree of the catalyst, it is difficult to directly use the powder-type catalyst in the industry. For example, when a reformer is driven using the powder-type catalyst, the catalyst comes out together with a material produced after the reaction, and in this case, the catalyst in the form of a powder gradually accumulates in the stream tube at the exit portion, and eventually, a phenomenon of blocking the entire tube may occur. Therefore, there is a disadvantage in that the powder-type catalysts cannot be used in the commercial reformers used in the industry.

**In** addition, the pellet-type support catalyst is currently frequently used in industrial reformers. Due to the limitation of the mass transfer rate, the performance deteriorates compared to the powder-type catalyst only in terms of the catalyst performance, but there is an advantage in that the pellet-type support catalyst can be used for a long period of time because a support is used. However, a $\gamma$-$Al_2O_3$ pellet, which is often used as the pellet-type support catalyst, has a weak structural strength, and thus may be easily broken, and accordingly, there is a disadvantage in that a differential pressure in the reactor is generated. Furthermore, since the volume is large due to the characteristics of the pellet-type support catalyst, the volume thereof becomes considerably large when the pellet-type support catalyst is used in a high-capacity reformer. Further, all reforming reactions are sensitive to reaction temperature, but the existing pellet-type catalyst has a disadvantage in that heat is not evenly distributed throughout the reactor due to a large reduction in thermal conductivity.

Thus, the present application intended to alleviate a phenomenon of blocking the stream tube, which is a disadvantage of the powder-type, and improve the heat and mass transfer rates which are a common disadvantage of the powder-type and the pellet-type, through a method of coating a porous metal support having high heat and mass transfer rates with a catalyst.

The porous metal support catalyst may be produced by coating the surface of the porous metal support with a slurry prepared by mixing a catalyst precursor or a catalyst powder with a binder, an additive, and the like. In order to introduce catalyst particles onto the surface of a porous metal support, an organic binder and/or an inorganic binder may be added and used during the preparation of the slurry. The organic binder remains in the slurry until the drying and firing process, and may contribute to the reduction of surface tension and the stabilization of the slurry. The inorganic binder remains between the catalyst particles or between the catalyst particles and the porous metal support after the firing process to serve to fix the catalyst particles on the porous metal support, and may be usually used by adding silica, alumina sol or colloidal forms. When a large amount of the inorganic binder is used, there is an advantage in that a bond between the catalyst particles and the porous metal support becomes hard, but conversely, a large amount of the binder is present on the surface of the catalyst particles, so reaction sites may be reduced, the binder may also affect the catalyst phase, and simultaneously, the binder may also participate in the reaction to induce undesired side reactions. Thus, the catalyst precursor is directly used for the purpose of immediately introducing the catalyst into the porous metal support without a binder in some cases, but there is a disadvantage in that the amount of catalyst supported at one time is small.

Thus, the present application intends to provide a catalyst for methane reformation capable of supporting a large amount of catalyst at one time and suppressing side reactions caused by a binder.

The catalyst for methane reformation according to an exemplary embodiment of the present application comprises: a porous metal support; perovskite-based catalyst particles supported on the porous metal support; and a perovskite-based binder supported on the porous metal support.

In an exemplary embodiment of the present application, the perovskite-based catalyst particles and the perovskite-based binder may each independently comprise a compound represented by the following Chemical Formula 1.

[Chemical Formula 1] $Sr_{1-x}A_xTi_{1-y}B_yO_{3-\delta}$

In Chemical Formula 1,

A is Y, La or Ba,
B is Ni, Co, Fe, Mn, Cr, Mo, Ru or Rh,
x is a real number of 0 or more and less than 1,
y is a real number of 0 or more and less than 0.5,
$\delta$ is a real number of more than 0 and less than 1, and
x + y > 0 is satisfied.

In an exemplary embodiment of the present application, the perovskite-based catalyst particles and the perovskite-based binder may also comprise the same compound and may comprise different compounds. Therefore, in an exemplary embodiment of the present application, the catalyst for methane reformation may comprise two different perovskite-based compounds.

In an exemplary embodiment of the present application, Chemical Formula 1 may be represented by any one of the following Chemical Formulae 2 to 4.

[Chemical Formula 2] $SrTi_{1-y}B_yO_{3-\delta}$

[Chemical Formula 3] $Sr_{1-x}Y_xTiO_{3-\delta}$

[Chemical Formula 4] $Sr_{1-x}Y_xTi_{1-y}B_yO_{3-\delta}$

In Chemical Formulae 2 to 4,

B is Ni or Ru,
x is a real number of more than 0 and less than 1,
y is a real number of more than 0 and less than 0.5, and
$\delta$ is a real number of more than 0 and less than 1.

In an exemplary embodiment of the present application, the porous metal support may be composed of a material capable of maintaining thermal stability at a high temperature of 800°C or more.

In an exemplary embodiment of the present application, the porous metal support may be composed of one or more selected among NiFeCrAl, NiCrAl, SiC, Al, stainless steel and inconel.

The porous metal support is a support having various shapes, has a small heat capacity and an excellent heat transfer ability, and thus may be molded into a desired shape for use. The form, size and the like of the porous metal support are not particularly limited, and the porous metal support may have a porosity of 10% to 99%, preferably 50% to 99%. In addition, the porous metal support may have an average pore size of 150 $\mu$m to 4,000 $\mu$m, 200 $\mu$m to 3,500 $\mu$m, and 400 $\mu$m to 3,000 $\mu$m. The porous metal support may be appropriately produced by those skilled in the art using methods known in the art, in consideration of the material, pore size, porosity, and the like of the porous metal support. According to an exemplary embodiment of the present application, a porous metal support having various materials, pore sizes, and the like may be applied as in Examples to be described below.

In an exemplary embodiment of the present application, a total content of the perovskite-based catalyst particles and the perovskite-based binder may be 3 wt% to 40 wt%, 6 wt% to 35 wt%, and 7 wt% to 30 wt%, based on a total weight of the catalyst for methane reformation. When the total content of the perovskite-based catalyst particles and the perovskite-based binder is less than 3 wt% based on the total weight of the catalyst for methane reformation, the reactivity may be lowered due to relatively few active sites on the catalyst surface, so a desired catalyst performance cannot be implemented. Furthermore, when the total content of the perovskite-based catalyst particles and the perovskite-based binder exceeds 40 wt%, a relatively large amount of catalyst component is contained compared to the porous metal support to clog pores, so there is a risk that differential pressure may be generated, and accordingly, the practical benefit of the methane reforming reaction may be reduced.

In an exemplary embodiment of the present application, at least a portion of the surface of the catalyst particles may comprise protrusion shapes. The protrusion shape may be spherical, elliptical, or a combination thereof, but is not limited thereto. Each of the protrusions may have an average diameter of 20 nm to 1 $\mu$m. The protrusions may cover the entire surface of the catalyst particles, or may cover only a portion of the surface of the catalyst particles.

In an exemplary embodiment of the present application, the perovskite-based binder is an inorganic binder, and may serve to fix the perovskite-based catalyst particles on the porous metal support. In addition, the perovskite-based binder may be present in the form of protrusions on the perovskite-based catalyst particles, and accordingly, the performance of the methane reforming reaction may be improved by increasing the reaction surface area of the catalyst.

Furthermore, according to an exemplary embodiment of the present application, by additionally applying a perovskite-based binder in addition to the perovskite-based catalyst particles, the content of supported catalyst may be increased during the coating of the porous metal support once compared to when catalyst particles are applied alone. Further, since it is possible to prevent side reactions or a catalyst phase change, which may occur when silica or another colloidal inorganic binder is applied by applying the perovskite-based binder according to an exemplary embodiment of the present application, the performance of the methane reforming reaction may be improved.

In an exemplary embodiment of the present application, the catalyst for methane reformation may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

The method for producing a catalyst for methane reformation according to an exemplary embodiment of the present application comprises: preparing a slurry by mixing perovskite-based catalyst particles and a perovskite-based catalyst sol; impregnating a porous metal support with the slurry; and drying and firing the porous metal support, in which the perovskite-based catalyst particles and the perovskite-based catalyst sol each independently comprise the compound represented by Chemical Formula 1.

In the method for producing a catalyst for methane reformation according to an exemplary embodiment of the present application, details on the porous metal support, the perovskite-based catalyst particles, and the like are the same as those described above.

In particular, a perovskite-based binder of the catalyst for methane reformation may be formed from the perovskite-based catalyst sol.

The perovskite-based catalyst sol may be formed from a solution comprising a precursor of a perovskite-based compound and a solvent. The precursor of the perovskite-based compound is a precursor of the metal constituting the perovskite-based compound, and the metal molar ratio of the perovskite-based compound may be adjusted by adjusting the content thereof. In addition, the precursor of the metal is not particularly limited, and ammonium salts, nitrates, carbonates, chlorides, lactates, hydroxides, organic acid salts, oxides of the metal elements, or mixtures thereof may be applied in combination. The solvent is not particularly limited, and any solvent known in the art may be used. For example, as the solvent, water, an alcoholic solvent, and the like may be applied, but the solvent is not limited thereto.

The method for producing a catalyst for methane reformation according to an exemplary embodiment of the present application comprises preparing a slurry by mixing perovskite-based catalyst particles and a perovskite-based catalyst sol. In this case, the solvent may be additionally introduced in order to adjust the concentration of the slurry.

The method for producing a catalyst for methane reformation according to an exemplary embodiment of the present application comprises impregnating a porous metal support with the slurry. In this case, removing excess slurry from the porous metal support may be further comprised.

The method for producing a catalyst for methane reformation according to an exemplary embodiment of the present application comprises drying and firing the porous metal support after the impregnating of the porous metal support with the slurry. The drying may be performed at a temperature of 50°C to 100°C for 20 minutes to 2 hours, and may be performed at a temperature of 60°C to 90°C for 30 minutes to 1.5 hours, but is not limited thereto. Further, the firing may be performed at a temperature of 350°C to 1100°C for 1 hour to 15 hours in an air atmosphere, and may be performed at a temperature of 500°C to 1,000°C for 3 hours to 10 hours in an air atmosphere, but is not limited thereto. When the firing is performed for less than 1 hour, the perovskite-based sol applied as a binder is not suitable for forming a crystalline phase, and when the firing is performed for more than 15 hours, it is not preferred in terms of energy consumption.

In an exemplary embodiment of the present application, the method may further comprise measuring the weight of the catalyst supported on the porous metal support after the drying and firing. In addition, by measuring the weight of the catalyst supported on the porous metal support, the impregnating of the above-described porous metal support with the slurry; and the drying and firing of the porous metal support may be performed repeatedly once to 20 times until a desired amount of catalyst is supported on the porous metal support.

The catalyst for methane reformation according to an exemplary embodiment of the present application can be produced by preparing a slurry in which catalyst particles and a catalyst sol of the same or similar series are mixed using an inorganic binder, and coating a metal support having high thermal conductivity with the slurry to increase the content of catalyst supported at one time and suppress side reactions caused by a binder.

Furthermore, the catalyst for methane reformation according to an exemplary embodiment of the present application is characterized in that reaction heat is easily controlled compared to pellet-type or powder-type catalysts in the related art because catalyst particles and a binder are supported on a porous metal support having high thermal conductivity.

[Mode for Invention]

Hereinafter, the present application will be described in detail with reference to Examples for specifically describing the present application. However, the Examples according to the present application may be modified in various forms, and it is not interpreted that the scope of the present application is limited to the Examples described in detail below. The Examples of the present application are provided for more completely explaining the present application to the person with ordinary skill in the art.

## <Examples>

### <Comparative Example 1>

1) Preparation of perovskite catalyst ($SrTiO_3$) sol

A perovskite catalyst ($SrTiO_3$) sol was prepared by the citrate method. Strontium nitrate ($Sr(NO_3)_3H_2O$) was dissolved in distilled water together with critic acid and ethylene glycol. After titanium isopropoxide ($Ti(OCH(CH_3)_2)_4$) was dissolved in ethanol, the two solutions were mixed at 70°C. Thereafter, after the mixture was stirred for 3 hours, the mixture was cooled to room temperature and stored.

2) Preparation of perovskite catalyst particles ($SrTi_{0.995}Ni_{0.005}O_{3-\delta}$, $0 < \delta < 1$)

A process was performed in the same manner as in 1) above, except that nickel nitrate ($Ni(NO_3)_2$) was added and used in an amount of 0.5 mol% relative to titanium.

The solution thus prepared was put into a crucible, dried at 150°C for 24 hours, and fired at 900°C to prepare perovskite catalyst particles.

3) Production of catalyst for methane reformation

A slurry was prepared by mixing the prepared perovskite catalyst particles and the perovskite catalyst sol. In this case, the content of the perovskite catalyst particles was 5 wt%, the content of the perovskite catalyst sol was 0.1 M, and water was used as the solvent.

A porous metal support (NiFeCrAl, average pore size: 800 μm) was impregnated with the slurry for 1 minute, and excess slurry was removed from the porous metal support through a blower. Thereafter, the porous metal support was dried at 70°C for 1 hour, and then heat-treated at a temperature of 900°C in an air atmosphere for 5 hours to produce a catalyst for methane reformation, in which a porous metal support was coated with perovskite catalyst particles and a perovskite binder. This process was repeated several times to finally produce a catalyst for methane reformation.

**<Example 1>**

1) Preparation of perovskite catalyst ($Sr_{0.95}Y_{0.05}Ti_{0.97}Ru_{0.03}O_{3-\delta}$, $0 < \delta < 1$) sol

A process was performed in the same manner as in 1) of Comparative Example 1, except that ruthenium chloride ($RuCl_3$) was added in an amount of 3 mol% relative to titanium, and yttrium nitrate ($Y(NO_3)_2$) was added and used in an amount of 5 mol% relative to strontium.

2) Preparation of perovskite catalyst particles ($Sr_{0.85}Y_{0.15}Ti_{0.95}Ru_{0.05}O_{3-\delta}$, $0 < \delta < 1$)

A process was performed in the same manner as in 1) of Comparative Example 1, except that ruthenium chloride ($RuCl_3$) was added in an amount of 5 mol% relative to titanium, and yttrium nitrate ($Y(NO_3)_2$) was added and used in an amount of 15 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 1 and NiFeCrAl (average pore size: 400 μm) was applied as a porous metal support.

**<Example 2>**

1) Preparation of perovskite catalyst ($SrTi_{0.97}Ni_{0.03}O_{3-\delta}$, $0 < \delta < 1$) sol

A process was performed in the same manner as in 1) of Comparative Example 1, except that nickel nitrate ($Ni(NO_3)_2$) was added and used in an amount of 3 mol% relative to titanium.

2) Preparation of perovskite catalyst particles ($SrTi_{0.95}Ni_{0.05}O_{3-\delta}$, $0 < \delta < 1$)

A process was performed in the same manner as in 1) of Comparative Example 1, except that nickel nitrate ($Ni(NO_3)_2$) was added and used in an amount of 5 mol% relative to titanium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 2.

**<Example 3>**

1) Preparation of perovskite catalyst ($Sr_{0.95}Y_{0.05}Ti_{0.97}Ru_{0.03}O_{3-\delta}$, $0 < \delta < 1$) sol

A process was performed in the same manner as in 1) of Comparative Example 1, except that ruthenium chloride ($RuCl_3$) was added in an amount of 3 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.90}Ni_{0.10}O_{3-\delta}$, $0 < \delta < 1$)

A process was performed in the same manner as in 1) of Comparative Example 1, except that nickel nitrate ($Ni(NO_3)_2$) was added in an amount of 10 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 3.

**<Example 4>**

1) Preparation of perovskite catalyst ($SrTi_{0.97}Ru_{0.03}0_{3-\delta}$, $0 < \delta < 1$) sol

A process was performed in the same manner as in 1) of Comparative Example 1, except that ruthenium chloride ($RuCl_3$) was added and used in an amount of 3 mol% relative to titanium.

2) Preparation of perovskite catalyst particles ($SrTi_{0.93}Ni_{0.07}O_{3-\delta}$, $0 < \delta < 1$)

A process was performed in the same manner as in 1) of Comparative Example 1, except that nickel nitrate ($Ni(NO_3)_2$) was added and used in an amount of 7 mol% relative to titanium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 4 and NiFeCrAl (average pore size: 1,200 μm) was applied as a porous metal support.

**<Example 5>**

1) Preparation of perovskite catalyst ($Sr_{0.95}Y_{0.05}Ti_{0.93}Ni_{0.07}O_{3-\delta}$, $0 < \delta < 1$) sol

A process was performed in the same manner as in 1) of Comparative Example 1, except that nickel nitrate ($Ni(NO_3)_2$) was added in an amount of 7 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.93}Ni_{0.07}O_{3-\delta}$, $0 < \delta < 1$)

A process was performed in the same manner as in 1) of Comparative Example 1, except that nickel nitrate ($Ni(NO_3)_2$) was added in an amount of 7 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 5 and NiFeCrAl (average pore size: 1,200 μm) was applied as a porous metal support.

**<Example 6>**

1) Preparation of perovskite catalyst ($Sr_{0.95}Y_{0.05}Ti_{0.85}Ru_{0.15}O_{3-\delta}$, $0 < \delta < 1$) sol

A process was performed in the same manner as in 1) of Comparative Example 1, except that ruthenium chloride ($RuCl_3$) was added in an amount of 15 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.80}Ni_{0.20}O_{3-\delta}$, $0 < \delta < 1$)

A process was performed in the same manner as in 1) of Comparative Example 1, except that nickel nitrate ($Ni(NO_3)_2$) was added in an amount of 20 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 6 and NiFeCrAl (average pore size: 3,000 μm) was applied as a porous metal support.

<**Example 7**>

1) Preparation of perovskite catalyst ($Sr_{0.95}Y_{0.05}Ti_{0.90}Ru_{0.10}O_{3-\delta}$, $0 < \delta < 1$) sol

A process was performed in the same manner as in 1) of Comparative Example 1, except that ruthenium chloride ($RuCl_3$) was added in an amount of 10 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.80}Ni_{0.20}O_{3-\delta}$, $0 < \delta < 1$)

A process was performed in the same manner as in 1) of Comparative Example 1, except that nickel nitrate ($Ni(NO_3)_2$) was added in an amount of 20 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 7 and NiFeCrAl (average pore size: 3,000 μm) was applied as a porous metal support.

**<Example 8>**

1) Preparation of perovskite catalyst ($SrTi_{0.97}Ni_{0.03}O_{3-\delta}$, $0 < \delta < 1$) sol

A process was performed in the same manner as in 1) of Comparative Example 1, except that nickel nitrate ($Ni(NO_3)_2$) was added and used in an amount of 3 mol% relative to titanium.

2) Preparation of perovskite catalyst particles ($SrTi_{0.97}Ni_{0.03}O_{3-\delta}$, $0 < \delta < 1$)

A process was performed in the same manner as in 1) of Comparative Example 1, except that nickel nitrate ($Ni(NO_3)_2$) was added and used in an amount of 3 mol% relative to titanium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 8 and NiCrAl (average pore size: 400 μm) was applied as a porous metal support.

**<Example 9>**

1) Preparation of perovskite catalyst ($Sr_{0.95}Y_{0.05}Ti_{0.97}Ni_{0.03}O_{3-\delta}$, $0 < \delta < 1$) sol

A process was performed in the same manner as in 1) of Comparative Example 1, except that nickel nitrate ($Ni(NO_3)_2$) was added in an amount of 3 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.97}Ni_{0.03}O_{3-\delta}$, $0 < \delta < 1$)

A process was performed in the same manner as in 1) of Comparative Example 1, except that nickel nitrate ($Ni(NO_3)_2$) was added in an amount of 3 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 9 and NiCrAl (average pore size: 800 μm) was applied as a porous metal support.

<**Example 10**>

1) Preparation of perovskite catalyst ($Sr_{0.95}Y_{0.05}Ti_{0.97}Ru_{0.03}O_{3-\delta}$, $0 < \delta < 1$) sol

A process was performed in the same manner as in 1) of Comparative Example 1, except that ruthenium chloride ($RuCl_3$) was added in an amount of 3 mol% relative to titanium, and yttrium nitrate ($Y(NO_3)_2$) was added and used in an amount of 5 mol% relative to strontium.

2) Preparation of perovskite catalyst particles ($SrTi_{0.90}Ni_{0.10}O_{3-\delta}$, $0 < \delta < 1$)

A process was performed in the same manner as in 1) of Comparative Example 1, except that nickel nitrate ($Ni(NO_3)_2$) was added and used in an amount of 10 mol% relative to titanium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 10 and NiCrAl (average pore size: 1,200 μm) was applied as a porous metal support.

**<Example 11>**

1) Preparation of perovskite catalyst ($Sr_{0.95}Y_{0.05}Ti_{0.90}Ru_{0.10}O_{3-\delta}$, $0 < \delta < 1$) sol

A process was performed in the same manner as in 1) of Comparative Example 1, except that ruthenium chloride ($RuCl_3$) was added in an amount of 10 mol% relative to titanium, and yttrium nitrate ($Y(NO_3)_2$) was added and used in an amount of 5 mol% relative to strontium.

2) Preparation of perovskite catalyst particles ($Sr_{0.95}Y_{0.05}Ti_{0.80}Ni_{0.20}O_{3-\delta}$, $0 < \delta < 1$)

A process was performed in the same manner as in 1) of Comparative Example 1, except that nickel nitrate ($Ni(NO_3)_2$) was added in an amount of 20 mol% relative to titanium, and yttrium nitrate ($Y(NO_3)_2$) was added and used in an amount of 5 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 11 and NiCrAl (average pore size: 1,500 μm) was applied as a porous metal support.

<**Example 12**>

1) Preparation of perovskite catalyst ($Sr_{0.85}Y_{0.15}Ti_{0.97}Ni_{0.03}O_{3-\delta}$, $0 < \delta < 1$) sol

A process was performed in the same manner as in 1) of Comparative Example 1, except that nickel nitrate ($Ni(NO_3)_2$) was added in an amount of 3 mol% relative to titanium, and yttrium nitrate ($Y(NO_3)_2$) was added and used in an amount of 15 mol% relative to strontium.

2) Preparation of perovskite catalyst particles ($Sr_{0.85}\ Y_{0.15}\ Ti_{0.97}Ru_{0.03}O_{3-\delta}$, $0 < \delta < 1$)

A process was performed in the same manner as in 1) of Comparative Example 1, except that ruthenium chloride ($RuCl_3$) was added in an amount of 3 mol% relative to titanium, and yttrium nitrate ($Y(NO_3)_2$) was added and used in an amount of 15 mol% relative to strontium.

The solution thus prepared was put into a crucible, dried at 150°C for 24 hours, and fired at 900°C to prepare perovskite catalyst particles.

3) Production of catalyst for methane reformation

A process was performed in the same manner as in 3) of Comparative Example 1, except that a slurry was prepared by mixing the perovskite catalyst particles and the perovskite catalyst sol prepared in Example 12 and NiCrAl (average pore size: 3,000 μm) was applied as a porous metal support.

**<Comparative Example 2>**

A catalyst was produced by performing a process in the same manner as in Example 8, except that an inorganic binder $SiO_2$ (Ludox) was applied instead of the perovskite catalyst sol and NiCrAl (average pore size: 1,200 μm) was applied as a porous metal support.

**<Comparative Example 3>**

A catalyst was produced by performing a process in the same manner as in Example 2, except that the perovskite catalyst particles were not applied, the perovskite catalyst sol was applied alone, and NiFeCrAl (average pore size: 1,200 μm) was applied as a porous metal support.

**<Comparative Example 4>**

A catalyst was produced by performing a process in the same manner as in Example 9, except that the perovskite catalyst sol was not applied, the perovskite catalyst particles were applied alone, and NiFeCrAl (average pore size: 3,000 μm) was applied as a porous metal support.

**<Comparative Example 5>**

A catalyst was produced by performing a process in the same manner as in Example 8, except that the porous metal support and the perovskite catalyst sol were not applied, and the perovskite catalyst particles were applied alone.

**<Comparative Example 6>**

A catalyst was produced by performing a process in the same manner as in Comparative Example 1, except that the perovskite catalyst particles were not applied, the perovskite catalyst sol was applied alone, and NiCrAl (average pore size: 3,000 μm) was applied as a porous metal support.

The configurations of the porous metal supports, the catalyst particles and the binders in the Examples and Comparative Examples are shown in the following Table 1.

[Table 1]

| | Porous metal support | Catalyst particles | Binder (formed by catalyst sol) |
|---|---|---|---|
| Example 1 | NiFeCrAl | $Sr_{0.85}Y_{0.15}Ti_{0.95}RU_{0.05}O_{3-\delta}$ | $Sr_{0.95}Y_{0.05}Ti_{0.97}Ru_{0.03}O_{3-\delta}$ |
| Example 2 | NiFeCrAl | $SrTi_{0.95}Ni_{0.05}O_{3-\delta}$ | $SrTi_{0.97}Ni_{0.03}O_{3-\delta}$ |
| Example 3 | NiFeCrAl | $Sr_{0.95}\ Y_{0.05}Ti_{0.90}Ni_{0.10}O_{3-\delta}$ | $Sr_{0.95}Y_{0.05}Ti_{0.97}RU_{0.03}O_{3-\delta}$ |
| Example 4 | NiFeCrAl | $SrTi_{0.93}Ni_{0.07}O_{3-\delta}$ | $SrTi_{0.97}Ru_{0.03}O_{3-\delta}$ |
| Example 5 | NiFeCrAl | $Sr_{0.95}Y_{0.05}Ti_{0.93}Ni_{0.07}O_{3-\delta}$ | $Sr_{0.95}Y_{0.05}Ti_{0.93}Ni_{0.07}O_{3-\delta}$ |
| Example 6 | NiFeCrAl | $Sr_{0.95}Y_{0.05}Ti_{0.80}Ni_{0.20}O_{3-\delta}$ | $Sr_{0.95}Y_{0.05}Ti_{0.85}RU_{0.15}O_{3-\delta}$ |
| Example 7 | NiFeCrAl | $Sr_{0.95}Y_{0.05}Ti_{0.80}Ni_{0.20}O_{3-\delta}$ | $Sr_{0.95}Y_{0.05}Ti_{0.90}Ru_{0.10}O_{3-\delta}$ |
| Example 8 | NiCrAl | $SrTi_{0.97}Ni_{0.03}O_{3-\delta}$ | $SrTi_{0.97}Ni_{0.03}O_{3-\delta}$ |
| Example 9 | NiCrAl | $Sr_{0.95}Y_{0.05}Ti_{0.97}Ni_{0.03}O_{3-\delta}$ | $Sr_{0.95}Y_{0.05}Ti_{0.97}Ni_{0.03}O_{3-\delta}$ |
| Example 10 | NiCrAl | $SrTi_{0.90}Ni_{0.10}O_{3-\delta}$ | $Sr_{0.95}Y_{0.05}Ti_{0.97}Ru_{0.03}O_{3-\delta}$ |
| Example 11 | NiCrAl | $Sr_{0.95}Y_{0.05}Ti_{0.80}Ni_{0.20}O_{3-\delta}$ | $Sr_{0.95}Y_{0.05}Ti_{0.90}Ru_{0.10}O_{3-\delta}$ |
| Example 12 | NiCrAl | $Sr_{0.85}Y_{0.15}Ti_{0.97}Ru_{0.03}O_{3-\delta}$ | $Sr_{0.85}Y_{0.15}Ti_{0.97}Ni_{0.03}O_{3-\delta}$ |
| Comparative Example 1 | NiFeCrAl | $SrTi_{0.995}Ni_{0.005}O_{3-\delta}$ | $SrTiO_3$ |
| Comparative Example 2 | NiCrAl | $SrTi_{0.97}Ni_{0.03}O_{3-\delta}$ | $SiO_2$ (Ludox) |
| Comparative Example 3 | NiFeCrAl | - | $SrTi_{0.97}Ni_{0.03}O_{3-\delta}$ |
| Comparative Example 4 | NiFeCrAl | $Sr_{0.95}Y_{0.05}Ti_{0.97}Ni_{0.03}O_{3-\delta}$ | - |
| Comparative Example 5 | - | $SrTi_{0.97}Ni_{0.03}O_{3-\delta}$ | - |
| Comparative Example 6 | NiCrAl | - | $SrTiO_3$ |

**<Experimental Example 1> Evaluation of catalyst for methane reformation**

A set of electron microscope photographs of the surface of the catalyst for methane reformation according to Example 1 of the present application is illustrated in the following FIG. 1.

When the catalysts for methane reformation in the Examples and Comparative Examples were produced, the content of the perovskite-based catalyst supported on the porous metal support during one coating was measured, and the results are shown in the following Table 2. Further, in the catalyst for methane reformation in the Examples and Comparative Examples, the presence or absence of protrusions on the surface of the catalyst particles coated on the porous metal support was confirmed, and the results are shown in the following Table 2.

The amount of catalyst supported may be calculated by the following Equation 1, and the presence or absence of protrusions may be confirmed by observing the surface image through SEM.

Amount of catalyst supported (wt%) = (total weight of catalyst - weight of porous metal support) / (total weight of catalyst) × 100 [Equation 1]

[Table 2]

| | Total content of supported catalyst (wt%) | Content of catalyst supported during one coating (wt%) | Presence or absence of protrusion |
|---|---|---|---|
| Example 1 | 9.6 | 2.4 | O |
| Example 2 | 12.8 | 3.1 | O |
| Example 3 | 14.0 | 3.5 | O |
| Example 4 | 11.4 | 11.4 | O |
| Example 5 | 25.2 | 3.6 | O |
| Example 6 | 21.3 | 7.1 | O |
| Example 7 | 15.2 | 15.2 | O |
| Example 8 | 8.7 | 2.9 | O |
| Example 9 | 15.5 | 3.1 | O |
| Example 10 | 22.4 | 11.2 | O |
| Example 11 | 27.0 | 13.5 | O |
| Example 12 | 20.8 | 10.4 | O |
| Comparative Example 1 | 15.2 | 1.9 | O |
| Comparative Example 2 | 11 | 1.1 | Partially present |
| Comparative Example 3 | 13.6 | 0.8 | O |
| Comparative Example 4 | Catalyst not attached | Catalyst not attached | X |
| Comparative Example 5 | - | - | - |
| Comparative Example 6 | - | - | O |

As shown in the above results, in Comparative Examples 1 to 3, the content of catalyst supported during one coating was small, so the number of times of coating had to be increased, resulting in a problem of increased process costs, and in Comparative Example 4, the catalyst was not attached at all. In addition, in Comparative Example 5, the content of catalyst particles supported on the porous metal support could not be measured because the catalyst particles were applied alone, and in Comparative Example 6, the content of active metal capable of acting as a catalyst was not measured.

**<Experimental Example 2> Evaluation of reforming reaction of methane**

A fixed-bed reactor system was introduced to carry out a dry reforming reaction of methane. A Quartz tube reactor (inner diameter = 1/2 inch, length = 50 cm) was used and packed with each catalyst (about 2.5 g) of the Examples and the Comparative Examples. First, after the catalyst underwent a reduction process at 800°C under 10% $H_2/N_2$ conditions for 2 hours, a catalytic reaction was performed for 100 hours.

Gas composition: $CH_4 : CO_2 : N_2 = 1 : 1.2 : 0.96$
Flow rate: weight hour space velocity (WHSV) = 3,000 cc/g·hr to 100,000 cc/g·hr
Reaction temperature: 800°C
Reaction pressure: 1 bar

A reaction conversion rate after 100 hours of reaction was calculated by analyzing the composition of the produced gas using gas chromatography (GC), and is shown in the following Table 3.

$$\text{Conversion rate } (Xi, \%) = [(Fi_{in} - Fi_{out}) / Fi_{in}] \times 100 \ (Fi = \text{flow rate of } i)$$

**<GC analysis conditions>**

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

[Table 3]

| | WHSV(cc/g·hr) | Methane conversion rate (%) | conversion rate (%) |
|---|---|---|---|
| Example 1 | 6,000 | 88 | 88 |
| Example 2 | 6,000 | 90 | 88 |
| Example 3 | 6,000 | 95 | 94 |
| Example 4 | 6,000 | 89 | 88 |
| Example 5 | 6,000 | 95 | 94 |
| Example 6 | 6,000 | 96 | 94 |
| Example 7 | 6,000 | 97 | 94 |
| Example 8 | 6,000 | 88 | 87 |
| Example 9 | 6,000 | 94 | 93 |
| Example 10 | 6,000 | 97 | 94 |
| Example 11 | 6,000 | 95 | 94 |
| Example 12 | 6,000 | 96 | 94 |
| Comparative Example 1 | 6,000 | 81 | 80 |
| Comparative Example 2 | 6,000 | 50 | 53 |
| Comparative Example 3 | 6,000 | 86 | 85 |
| Comparative Example 4 | 6,000 | 10 | 13 |
| Comparative Example 5 | 6,000 | 68 | 65 |
| Comparative Example 6 | 6,000 | 10 | 11 |

As in the above results, it can be confirmed that the catalyst for methane reformation according to an exemplary embodiment of the present application has excellent methane conversion rate and conversion rate during the reforming reaction of methane.

The catalyst for methane reformation according to an exemplary embodiment of the present application can be produced by preparing a slurry in which catalyst particles and a catalyst sol of the same or similar series are mixed using an inorganic binder, and coating a metal support having high thermal conductivity with the slurry to increase the content of catalyst supported at one time and suppress side reactions caused by a binder.

Furthermore, the catalyst for methane reformation according to an exemplary embodiment of the present application is characterized in that reaction heat is easily controlled compared to pellet-type or powder-type catalysts in the related art because catalyst particles and a binder are supported on a porous metal support having high thermal conductivity.

## Claims

**1.** A catalyst for methane reformation, comprising:

a porous metal support;
perovskite-based catalyst particles supported on the porous metal support; and
a perovskite-based binder supported on the porous metal support,
wherein the perovskite-based catalyst particles and the perovskite-based binder each independently comprise a compound represented by the following Chemical Formula 1:

[Chemical Formula 1] $Sr_{1-x}A_xTi_{1-y}B_yO_{3-\delta}$

in Chemical Formula 1,
A is Y, La or Ba,
B is Ni, Co, Fe, Mn, Cr, Mo, Ru or Rh,
x is a real number of 0 or more and less than 1,
y is a real number of 0 or more and less than 0.5,
$\delta$ is a real number of more than 0 and less than 1, and
$x + y > 0$ is satisfied.

2. The catalyst of claim 1, wherein Chemical Formula 1 is represented by any one of the following Chemical Formulae 2 to 4:

[Chemical Formula 2] $SrTi_{1-y}B_yO_{3-\delta}$

[Chemical Formula 3] $Sr_{1-x}Y_xTiO_{3-\delta}$

[Chemical Formula 4] $Sr_{1-x}Y_xTi_{1-y}B_yO_{3-\delta}$

in Chemical Formulae 2 to 4,
B is Ni or Ru,
x is a real number of more than 0 and less than 1,
y is a real number of more than 0 and less than 0.5, and
$\delta$ is a real number of more than 0 and less than 1.

3. The catalyst of claim 1, wherein the perovskite-based catalyst particles and the perovskite-based binder comprise different compounds.

4. The catalyst of claim 1, wherein the perovskite-based catalyst particles and the perovskite-based binder comprise the same compound.

5. The catalyst of claim 1, wherein the porous metal support is composed of one or more selected among NiFeCrAl, NiCrAl, SiC, Al, stainless steel and inconel.

6. The catalyst of claim 1, wherein a total content of the perovskite-based catalyst particles and the perovskite-based binder is 3 wt% to 40 wt% based on a total weight of the catalyst for methane reformation.

7. The catalyst of claim 1, wherein at least a portion of the surface of the perovskite-based catalyst particles comprises protrusion shapes.

8. The catalyst of claim 1, wherein the catalyst for methane reformation is applied to a steam reforming process, a carbon dioxide ($CO_2$) reforming process, a catalytic partial oxidation process, an autothermal reforming process, a tri-reforming process or a mixed reforming process.

9. A method for producing a catalyst for methane reformation, the method comprising:

preparing a slurry by mixing perovskite-based catalyst particles and a perovskite-based catalyst sol;
impregnating a porous metal support with the slurry; and
drying and firing the porous metal support,
wherein the perovskite-based catalyst particles and the perovskite-based catalyst sol each independently comprise a compound represented by the following Chemical Formula 1:

[Chemical Formula 1] $Sr_{1-x}A_xTi_{1-y}B_yO_{3-\delta}$

wherein, in Chemical Formula 1,
A is Y, La or Ba,
B is Ni, Co, Fe, Mn, Cr, Mo, Ru or Rh,
x is a real number of 0 or more and less than 1,
y is a real number of 0 or more and less than 0.5,
$\delta$ is a real number of more than 0 and less than 1, and
$x + y > 0$ is satisfied.

**10.** The method of claim 9, wherein Chemical Formula 1 is represented by any one of the following Chemical Formulae 2 to 4:

[Chemical Formula 2] $SrTi_{1-y}B_yO_{3-\delta}$

[Chemical Formula 3] $Sr_{1-x}Y_xTiO_{3-\delta}$

[Chemical Formula 4] $Sr_{1-x}Y_xTi_{1-y}B_yO_{3-\delta}$

in Chemical Formulae 2 to 4,
B is Ni or Ru,
x is a real number of more than 0 and less than 1,
y is a real number of more than 0 and less than 0.5, and
$\delta$ is a real number of more than 0 and less than 1.

**11.** The method of claim 9, wherein the porous metal support is composed of one or more selected among NiFeCrAl, NiCrAl, SiC, Al, stainless steel and inconel.

## Patentansprüche

**1.** Katalysator zur Methanreformierung, umfassend:

einen porösen Metallträger;
Katalysatorpartikel auf Perowskitbasis, die auf dem porösen Metallträger getragen werden; und
ein Bindemittel auf Perowskitbasis, das auf dem porösen Metallträger getragen wird,
wobei die Katalysatorpartikel auf Perowskitbasis und das Bindemittel auf Perowskitbasis jeweils unabhängig eine Verbindung umfassen, die durch die folgende chemische Formel 1 dargestellt wird:

[Chemische Formel 1] $Sr_{1-x}A_xTi_{1-y}B_yO_{3-\delta}$

wobei in der chemischen Formel 1
A Y, La oder Ba ist,
B Ni, Co, Fe, Mn, Cr, Mo, Ru oder Rh ist,
x eine reelle Zahl von 0 oder mehr und weniger als 1 ist,
y eine reelle Zahl von 0 oder mehr und weniger als 0,5 ist,
$\delta$ eine reelle Zahl von mehr als 0 und weniger als 1 ist und
$x + y > 0$ erfüllt ist.

**2.** Katalysator nach Anspruch 1, wobei die chemische Formel 1 durch eine der folgenden chemischen Formeln 2 bis 4 dargestellt wird:

[Chemische Formel 2] $SrTi_{1-y}B_yO_{3-\delta}$

[Chemische Formel 3] $Sr_{1-x}Y_xTiO_{3-\delta}$

[Chemische Formel 4] $Sr_{1-x}Y_xTi_{1-y}B_yO_{3-\delta}$

wobei in den Chemischen Formeln 2 bis 4
B Ni oder Ru ist,
x eine reelle Zahl von mehr als 0 und weniger als 1 ist,
y eine reelle Zahl von mehr als 0 und weniger als 0,5 ist und
$\delta$ eine reelle Zahl von mehr als 0 und weniger als 1 ist.

3. Katalysator nach Anspruch 1, wobei die Katalysatorpartikel auf Perowskitbasis und das Bindemittel auf Perowskitbasis verschiedene Verbindungen umfassen.

4. Katalysator nach Anspruch 1, wobei die Katalysatorpartikel auf Perowskitbasis und das Bindemittel auf Perowskitbasis die gleiche Verbindung umfassen.

5. Katalysator nach Anspruch 1, wobei der poröse Metallträger aus einem oder mehreren, ausgewählt aus NiFeCrAl, NiCrAl, SiC, Al, Edelstahl und Inconel, zusammengesetzt ist.

6. Katalysator nach Anspruch 1, wobei ein Gesamtgehalt der Katalysatorpartikel auf Perowskitbasis und des Bindemittels auf Perowskitbasis 3 Gew.-% bis 40 Gew.-%, bezogen auf ein Gesamtgewicht des Katalysators zur Methanreformierung, beträgt.

7. Katalysator nach Anspruch 1, wobei mindestens ein Teil der Oberfläche der Katalysatorpartikel auf Perowskitbasis vorstehende Formen umfasst.

8. Katalysator nach Anspruch 1, wobei der Katalysator zur Methanreformierung auf ein Dampfreformierungsverfahren, ein Kohlendioxid($CO_2$)-Reformierungsverfahren, ein katalytisches partielles Oxidationsverfahren, ein autothermes Reformierungsverfahren, ein Trireformierungsverfahren oder ein Mischreformierungsverfahren angewendet wird.

9. Verfahren zur Herstellung eines Katalysators zur Methanreformierung, wobei das Verfahren umfasst:

Herstellen einer Aufschlämmung durch Mischen von Katalysatorpartikeln auf Perowskitbasis und einem Katalysatorsol auf Perowskitbasis;
Imprägnieren eines porösen Metallträgers mit der Aufschlämmung; und
Trocknen und Brennen des porösen Metallträgers,
wobei die Katalysatorpartikel auf Perowskitbasis und das Katalysatorsol auf Perowskitbasis jeweils unabhängig eine Verbindung umfassen, die durch die folgende chemische Formel 1 dargestellt wird:

[Chemische Formel 1] $Sr_{1-x}A_xTi_{1-y}B_yO_{3-\delta}$

wobei in der chemischen Formel 1
A Y, La oder Ba ist,
B Ni, Co, Fe, Mn, Cr, Mo, Ru oder Rh ist,
x eine reelle Zahl von 0 oder mehr und weniger als 1 ist,
y eine reelle Zahl von 0 oder mehr und weniger als 0,5 ist,
$\delta$ eine reelle Zahl von mehr als 0 und weniger als 1 ist und
$x + y > 0$ erfüllt ist.

10. Verfahren nach Anspruch 9, wobei die chemische Formel 1 durch eine der folgenden chemischen Formeln 2 bis 4 dargestellt wird:

[Chemische Formel 2] $SrTi_{1-y}B_yO_{3-\delta}$

[Chemische Formel 3] $Sr_{1-x}Y_xTiO_{3-\delta}$

[Chemische Formel 4] $Sr_{1-x}Y_xTi_{1-y}B_yO_{3-\delta}$

wobei in den Chemischen Formeln 2 bis 4
B Ni oder Ru ist,
x eine reelle Zahl von mehr als 0 und weniger als 1 ist,
y eine reelle Zahl von mehr als 0 und weniger als 0,5 ist und
$\delta$ eine reelle Zahl von mehr als 0 und weniger als 1 ist.

**11.** Verfahren nach Anspruch 9, wobei der poröse Metallträger aus einem oder mehreren, ausgewählt aus NiFeCrAl, NiCrAl, SiC, Al, Edelstahl und Inconel, zusammengesetzt ist.

## Revendications

**1.** Catalyseur pour le reformage du méthane, comprenant :

un support métallique poreux ;
des particules de catalyseur à base de pérovskite supportées sur le support métallique poreux ; et
un liant à base de pérovskite supporté sur le support métallique poreux,
dans lequel les particules de catalyseur à base de pérovskite et le liant à base de pérovskite comprennent chacun indépendamment un composé représenté par la Formule chimique 1 ci-après :

[Formule chimique 1] $Sr_{1-x}A_xTi_{1-y}B_yO_{3-\delta}$

dans la Formule chimique 1,
A est Y, La ou Ba,
B est Ni, Co, Fe, Mn, Cr, Mo, Ru ou Rh,
x est un nombre réel égal ou supérieur à 0 et inférieur à 1,
y est un nombre réel égal ou supérieur à 0 et inférieur à 0,5,
$\delta$ est un nombre réel supérieur à 0 et inférieur à 1, et
x + y > 0 est satisfait.

**2.** Catalyseur selon la revendication 1, dans lequel la Formule chimique 1 est représentée par l'une quelconque des Formules chimiques 2 à 4 ci-après :

[Formule chimique 2] $SrTi_{1-y}B_yO_{3-\delta}$

[Formule chimique 3] $Sr_{1-x}Y_xTiO_{3-\delta}$

[Formule chimique 4] $Sr_{1-x}Y_xTi_{1-y}B_yO_{3-\delta}$

dans les Formules chimiques 2 à 4 ci-après,
B est Ni ou Ru,
x est un nombre réel supérieur à 0 et inférieur à 1,
y est un nombre réel supérieur à 0 et inférieur à 0,5, et
$\delta$ est un nombre réel supérieur à 0 et inférieur à 1.

**3.** Catalyseur selon la revendication 1, dans lequel les particules de catalyseur à base de pérovskite et le liant à base de pérovskite comprennent des composés différents.

**4.** Catalyseur selon la revendication 1, dans lequel les particules de catalyseur à base de pérovskite et le liant à base de pérovskite comprennent le même composé.

**5.** Catalyseur selon la revendication 1, dans lequel le support métallique poreux est composé d'un ou plusieurs éléments sélectionnés parmi NiFeCrAl, NiCrAl, SiC, Al, acier inoxydable et inconel.

**6.** Catalyseur selon la revendication 1, dans lequel une teneur totale des particules de catalyseur à base de pérovskite et du liant à base de pérovskite est 3 % en poids à 40 % en poids sur la base d'un poids total du catalyseur pour le reformage du méthane.

**7.** Catalyseur selon la revendication 1, dans lequel au moins une partie de la surface des particules de catalyseur à base de pérovskite comprend des formes saillantes.

**8.** Catalyseur selon la revendication 1, dans lequel le catalyseur pour le reformage du méthane est appliqué à un processus de reformage à la vapeur, un processus de reformage au dioxyde de carbone ($CO_2$), un processus d'oxydation catalytique partielle, un processus de reformage autothermique, un processus de tri-reformage ou un processus de reformage mixte.

**9.** Procédé de production d'un catalyseur pour le reformage du méthane, le procédé consistant à :

préparer une boue épaisse en mélangeant des particules de catalyseur à base de pérovskite et un sol de catalyseur à base de pérovskite ;
imprégner un support métallique poreux avec la boue épaisse ; et
sécher et faire cuire le support métallique poreux,
dans lequel les particules de catalyseur à base de pérovskite et le sol de catalyseur à base de pérovskite comprennent chacun indépendamment un composé représenté par la Formule chimique 1 ci-après :

[Formule chimique 1] $Sr_{1-x}A_xTi_{1-y}B_yO_{3-\delta}$

dans lequel, dans la Formule chimique 1,
A est Y, La ou Ba,
B est Ni, Co, Fe, Mn, Cr, Mo, Ru ou Rh,
x est un nombre réel égal ou supérieur à 0 et inférieur à 1,
y est un nombre réel égal ou supérieur à 0 et inférieur à 0,5,
$\delta$ est un nombre réel supérieur à 0 et inférieur à 1, et
$x + y > 0$ est satisfait.

**10.** Procédé selon la revendication 9, dans lequel Formule chimique 1 est représentée par l'une quelconque des Formules chimiques 2 à 4 ci-après :

[Formule chimique 2] $SrTi_{1-y}B_yO_{3-\delta}$

[Formule chimique 3] $Sr_{1-x}Y_xTiO_{3-\delta}$

[Formule chimique 4] $Sr_{1-x}Y_xTi_{1-y}B_yO_{3-\delta}$

dans les Formules chimiques 2 à 4 ci-après,
B est Ni ou Ru,
x est un nombre réel supérieur à 0 et inférieur à 1,
y est un nombre réel supérieur à 0 et inférieur à 0,5, et
$\delta$ est un nombre réel supérieur à 0 et inférieur à 1.

**11.** Procédé selon la revendication 9, dans lequel le support métallique poreux est composé d'un ou plusieurs éléments sélectionnés parmi NiFeCrAl, NiCrAl, SiC, Al, acier inoxydable et inconel.

[Figure 1]

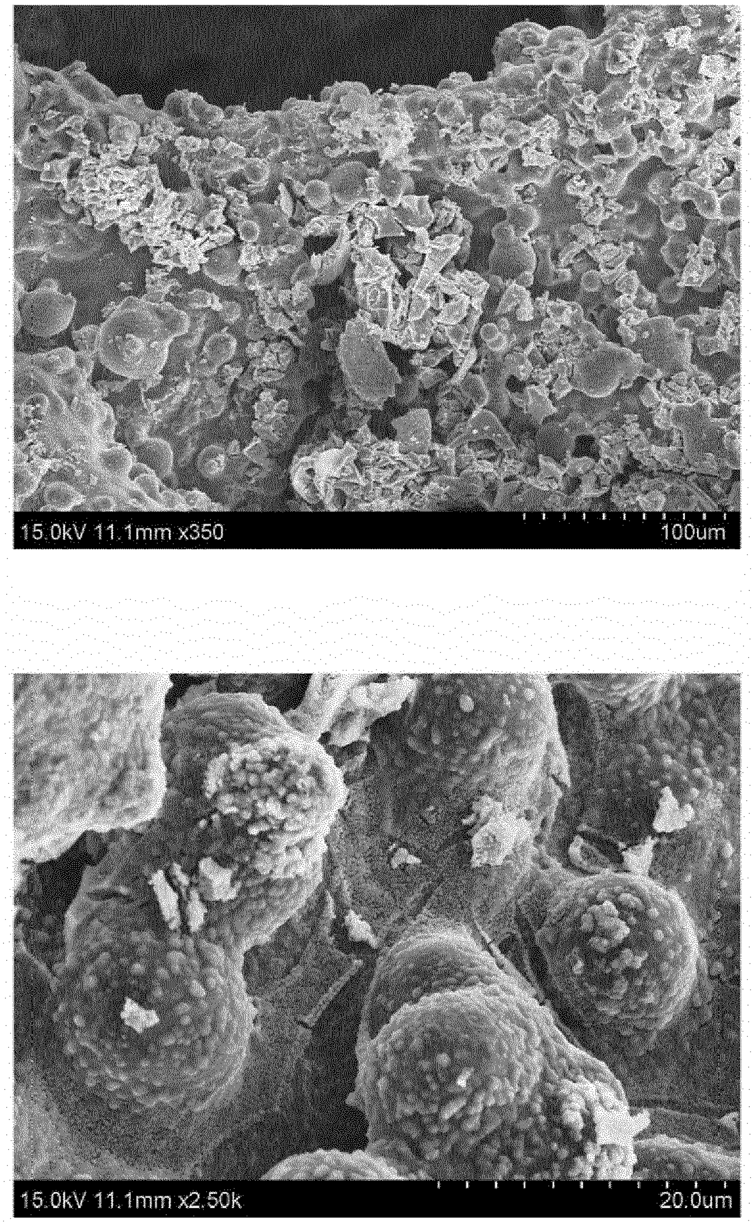

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210158414
- KR 20180136701 A